# EUROPEAN PATENT APPLICATION

(11) **EP 4 631 676 A1**
(43) Date of publication of application: **15.10.2025**
(21) Application number: 23900904.6
(22) Date of filing: 31.10.2023
(51) Int. Cl.: B25F 5/00, H02P 3/16, G08B 25/00, G08B 25/10

(54) **ELECTRIC GRINDER HAVING SAFETY MEANS**

(30) Priority: 08.12.2022 KR 20220170248
(71) Applicant: Aimsak Co., Ltd., Cheongju-si, Chungcheongbuk-do 28118 (KR)
(72) Inventor: PARK, Sangjun, Cheongju-si, Chungcheongbuk-do 28118 (KR)
(74) Representative: Dehns
(86) International application number: PCT/KR2023/017116
(87) International publication number: WO 2024/122884

(57) **Abstract**

The present invention relates to an electric grinder with safety measures, and includes a housing provided with a sensing means for sensing a human contact or a non-contact state in a grip part; a driving unit provided with a blade operating through a driving motor and a power transmission shaft on one side of the housing; a power supply unit provided on the other side of the housing and supplying power to the driving motor; and a control unit configured to control the driving motor to stop driving when the sensing means receives a signal of a human non-contact state.

## Description

### [Technical Field]

The present invention relates to an electric grinder, and more particularly, to an electric grinder with safety measures that allows a user to stop the operation of the tool when the tool is inadvertently or unconsciously missing during the use of the electric tool.

### [Background Art]

In general, electric tools have a structure in which a motor operated by power supplied from the outside of a battery is mounted inside a housing, and various tools such as drills, drivers, grinders, or circular saws are mounted in a tool mounting socket extended from the rotation shaft of the motor.

Since such an electric tool operates the tool with the force of the motor, it has superior work efficiency compared to a manual tool. Accordingly, the number of cases of purchasing and using electric tools in general households is increasing. The electric tool constantly vibrates and is impacted by the motor and tool rotating during work. As a result, the impact is transferred to the hand of the worker who grasped the electric tool, so the fatigue is increased. In addition, when the force to hold the electric tool falls, the user may unconsciously drop the electric tool and leading to a safety accident.

As a conventional technology, Korean Patent No. 10-2279997 (Patent Document 1) discloses an " electric tool safety device and its operation method" that is configured to automatically turn off the power of the electric tool when the user misses the electric tool while using the electric tool. Korean Patent No. 10-1631236 (Patent Document 2) discloses a "grinder having an automatic power interruption unit." Korean Patent No. 10-1408278 (Patent Document 3) discloses "a portable electric tool having an emergency stop structure" that is configured to stop operation when an electric tool is detached from a user's hand. In addition to this, Japanese Patent Application Publication No. 2009-220213 (Patent Document 4) discloses an 'electrical tool' to prevent motor driving due to malfunction of a trigger switch.

Patent Documents 1 and 3 mentioned above are made to check whether a user holds the handle of a tool through a light sensor or a piezoelectric sensor. However, since the degree of sensing varies depending on the work environment or the location of the user's grip, the power of the tool may not be turned off when necessary.

Patent Document 2 has an automatic power interruption unit that selectively operates the electronic switch to control the power supply. However, since the power interruption unit is configured to mechanically operate the electronic switch having a spring by a seesaw member and the paddle unit, there is an inconvenience that the user must operate the power interruption unit in a grip state.

In addition, Patent Document 4 has a double safety device that prevents motor driving due to malfunction through a trigger switch, but it was not possible to solve a safety accident that occurs by the user unconsciously missing the electric tool.

As described above, in patent documents 1, 2, 3, and 4, there is a limit to preventing safety accidents that occur inadvertently or unconsciously by users when using electric tools, and safety measures for users after safety accidents occur were insufficient.

### [Description of the Invention]

### [Technical Problem]

The first object of the present invention is to provide an electric grinder with safety measures configured to allow a user to switch to a safety mode and immediately stop the operation when the user misses the tool regardless of the working environment or the user's grip position, and to allow the user to release the safety mode and then operate the tool again.

The second object of the present invention is to provide an electric grinder with safety measures configured to be transmitted to an external institution by emergency notification in interlocking with a mobile device when the tool is not switched to a safety mode release state within a time set when a safety accident occurs.

The third object of the present invention is to provide an electric grinder with safety measures that allows a user to improve work efficiency and work safety by setting an operation time of the tool and allowing the tool to operate by the setting time.

### [Technical Solution]

In order to achieve the above objective of the present invention, an electric grinder with safety measures includes: a housing provided with a sensing means for sensing a human contact or a non-contact state in a grip part; a driving unit provided with a blade operating through a driving motor and a power transmission shaft on one side of the housing; a power supply unit provided on the other side of the housing and supplying power to the driving motor; and a control unit configured to control the driving motor to stop driving when the sensing means receives a signal of a human non-contact state.

The electric grinder having a safety means may further include a mode setting unit configured to display an image of a tool operation state on a surface of the housing and to select and switch to a safety mode, an operating mode, or a reset mode.

When receiving a signal in a human non-contact state through the sensing means, the control unit may switch to the safety mode ofthe mode setting unit to stop the driving ofthe driving motor and then cut off the power of the power switch.

The mode setting unit may be switchable from a certain condition to a safety mode by the control unit or may be selectively switchable to a reset mode or an operating mode by a user, and may be able to change a tool operation condition through time setting in the corresponding mode.

The mode setting unit may be configured to be set to be interlocked with the user's mobile device.
when the mode setting unit is switched from the operating mode to the safety mode and then not switched to the reset mode or the operating mode within the set time, the control unit may transmit an emergency notification to an external emergency institution through the mobile device.

The sensing means may be a metal pad or a touch sensor that can detect current flowing in a human body, and the sensing means may be mounted in a plurality on the surface of the grip part.

### [Advantageous Effects]

According to the electric grinder with safety measures according to the present invention, when the user misses the tool, the control unit stops the operation of the driving motor by receiving a signal from the sensing means and then has a double safety function of blocking the power switch, so that it is possible to prevent safety accidents that occur inadvertent or involuntary by the user along with improving the stability of the tool. In addition, since the user can selectly switch from the safety mode of the mode setting unit to the operating mode or the reset mode and use it, the convenience of the tool can be improved.

Moreover, since the user can directly set the time for the safety mode or the operating mode through the mode setting unit and appropriately allocate the work time and the rest time, it is possible to increase work efficiency and safety during long-term work.

Meanwhile, when the user does not take a separate action within the set time after the switch to the safety mode when the safety accident occurs, the user can quickly take the safety action through the emergency notification to the external emergency institution via the mobile device.

### [Brief Description of The Drawings]

FIG. 1 is a perspective view showing an electric grinder with safety measures according to an embodiment of the present invention.
FIG. 2 is an exploded perspective view of an electric grinder according to an embodiment of the present invention.
FIG. 3 is a block configuration diagram of an electric grinder according to an embodiment of the present invention.
FIG. 4 is a state diagram of an emergency situation of an electric grinder according to an embodiment of the present invention.
FIG. 5 is a flowchart for power interruption in an emergency of an electric grinder according to an embodiment of the present invention.

### [Best Mode for Invention]

Hereinafter, embodiments of the present invention will be described in detail. However, this is presented as an example, and the present invention is not limited thereto, and the present invention is defined only by the scope of the claims to be described later. The embodiments described below may be modified in various forms without departing from the concept and scope of the present invention. As far as possible, the same or similar parts are indicated using the same reference numerals in the drawings.

The terminology used hereinafter is for the purpose of referring to specific examples only and is not intended to limit the present invention. As used herein, the singular forms also include the plural forms unless the phrase clearly indicates the opposite meaning. The meaning of "including" used in the specification specifies specific characteristics, regions, integers, steps, operations, elements and/or components, and does not exclude the presence or addition of other specific characteristics, regions, integers, steps, operations, elements, components and/or groups.

Hereinafter, preferred embodiments ofthe present invention are described. However, the following examples are merely a preferred embodiment of the present invention, and the present invention is not limited to the following examples.

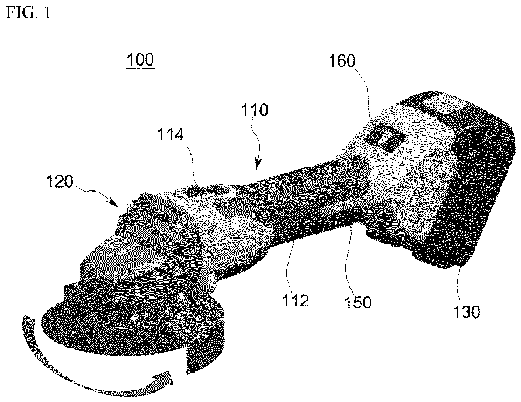

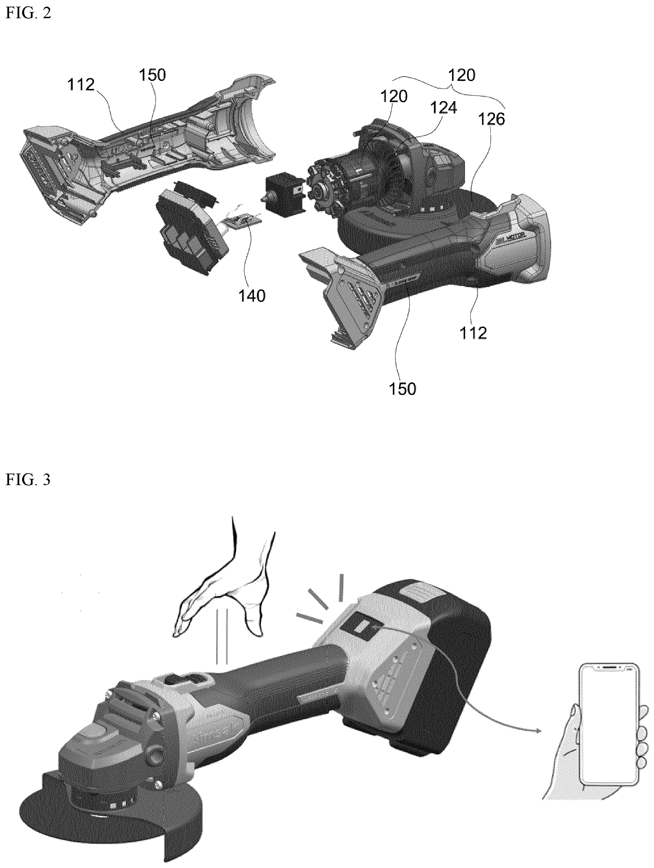

FIG. 1 is a perspective view showing an electric grinder with safety measures according to an embodiment of the present invention, FIG. 2 is an exploded perspective view of an electric grinder according to an embodiment of the present invention, and FIG. 3 is a block configuration diagram of an electric grinder according to an embodiment of the present invention.

As shown in FIGS 1 and 2, the electric grinder 100 according to an embodiment of the present invention includes a housing 110, a driving unit 120, a power supply unit 130, a control unit 140, a sensing means 150, and a mode setting unit 160.

The housing 110 is a divided structure, and the grip part 112 is provided in the center, and the driving unit 120 and the power supply unit 130 are installed in the front and back of the housing 110 based on the grip part 112. In addition, the housing 110 is provided with sensing means 150 for sensing human contact or non-contact state on the surface of the grip part 112. A mode setting unit 160 for setting a mode is provided in a portion adjacent to the power supply unit 130 in the housing 110, and the mode setting unit 160 displays the tool operation state as an image.

Meanwhile, the housing 110 is provided with a power switch 114 adjacent to the driving unit 120 to turn on or off the power to the driving unit 120. Here, the power switch 114 may be turned on or off manually by the user and may be turned off by the controller 140 under certain conditions.

The driving unit 120 is provided on one side of the grip part 112 of the housing 110 and includes a driving motor 122, a power transmission mechanism 124, and a blade 126. The driving unit 120 is configured to receive power from the power supply unit 130 to rotate the driving motor 122 and transmit rotational force to the blade 126 through the power transmission mechanism 124 interlocked with the rotation shaft of the driving motor 122.

Here, the driving motor 122 is configured to select and drive through the power switch 114 which turns on or off the power of the power supply unit 130. The blade 126 generally refers to a plate-type grinder rotatably connected to the tip of the shaft.

The power supply unit 130 is configured to supply power to the driving motor 122 while the power switch 114 provided on the other side of the grip part 112 of the housing 110 is turned on.

Here, the power supply unit 130 may be configured as a rechargeable battery module that is detachable from the housing 100. Of course, the power supply unit 130 may be configured with a power cable that receives power from the outside.

Meanwhile, the power supply unit 130 is configured to block the power of the power switch 114 under a certain condition by the control unit 140 to be described later.

As shown in FIG 2, the control unit 140 may be provided in a modular form on a printed circuit board (PCB) provided inside the housing 110. As shown in FIG 3, the control unit 140 selectively controls the driving unit 120, the power supply unit 130, the sensing means 150, and the mode setting unit 160.

First, the control unit 140 is configured to immediately stop the operation of the driving motor 122.

In other words, when the user's hand leaves the grip part 112 of the housing 110 and receives a signal in a human non-contact state through the sensing means 150, the control unit 140 immediately stops the operation of the driving motor 122. Of course, when the user's hand does not leave the grip part 112 of the housing 110 and the sensing means 114 receives a signal in a human contact state, the driving motor 122 may continue to operate. Even in this case, the operation of the tool may be stopped according to the condition set in the mode setting unit 160 to be described later (tool operating time setting).

Next, the control unit 140 may stop the operation of the driving motor 122 and then turn off the power switch 114 to block the supply of power to the driving motor 122. Here, the reason why the control unit 140 shuts off the power switch 114 again is to give a safety function that prevents the user from injury due to malfunction, such as restarting after the driving motor 122 is stopped.

Meanwhile, the control unit 140 is configured to select and control the mode of the mode setting unit 160 to be described later. That is, the control unit 140 may control the mode of the mode setting unit 160 under certain conditions and transmit the mode to an external emergency institution through a mobile device as an emergency notification.

As shown in FIGS 1 and 2, the sensing means 150 may be mounted in a plurality on the surface of the grip part 112 of the housing 110. Here, the sensing means 150 may be implemented by a metal pad or a touch sensor capable of detecting current flowing in a human body. In other words, the sensing means 150 are mounted in a plurality on the surface of the grip part 112 to detect a contact state (hold the tool) or a non-contact state (not hold the tool) of the user's human body (hand).

As shown in FIGS 1 and 3, the mode setting unit 160 displays the tool operation state on the surface of the housing 110 as an image and selects and switches to a safety mode, an operating mode, or a reset mode in a touch screen or a button manner. Here, the safety mode is a mode in which the power of the power supply unit 130 is blocked from being supplied to the driving motor 122 so that the tool is not operated. The operating mode is a mode in which the power of the power supply unit 130 is supplied to the driving motor 122 to operate the tool. The reset mode is a mode that initializes for the operation of the tool.

In addition, the mode setting unit 160 is configured to be controlled under a predetermined condition by the control unit 140, and the user can set a time for the safety mode or the operating mode when necessary. For example, when the operating mode is set for one hour, the tool may be stopped after one hour of operating, so it is possible to increase work efficiency and work safety when the tool is used for a long time.

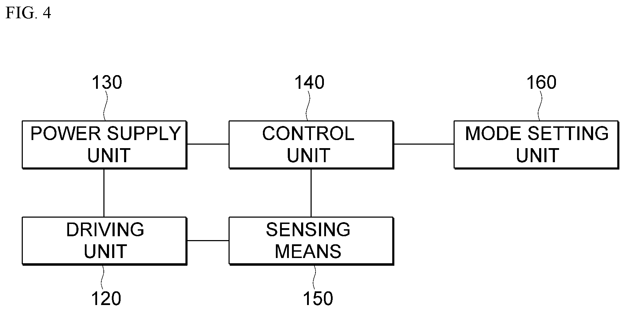

Moreover, the mode setting unit 160 is configured to be interlocked with the mobile device as shown in FIG. 4. In other words, when the user does not separately take measures within the set time after the mode setting unit 160 switches from the operating mode to the safety mode, the user may transmit the emergency notification to the external emergency institution through the mobile device.

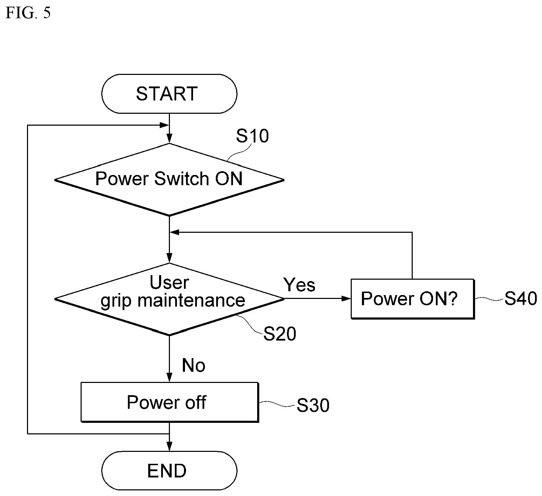

FIG. 5 is a flowchart for power cut-off in an emergency of an electric grinder with safety measures according to an embodiment of the present invention.

The process of cutting off power in an emergency of the electric grinder 100 according to an embodiment of the present invention is as follows.

First, step S10 of determining whether the power supplied from the power supply unit 130 to the driving motor 122 of the driving unit 120 is in the on state is performed. That is, the control unit 140 repeatedly performs the above step S10 when the power switch 114 is in the off state. When the power switch 114 is in the on state, the process proceeds to the next step.

Next, step S20 of determining whether the user maintains the grip part 112 of the housing 110 in the grip state in the operating state of the tool is performed. Here, the grip maintenance determination is based on the human contact state (the state of holding the tool) or the non-contact state (the state of not holding the tool) of the user through the sensing means 150.

Next, step S30 of stopping the operation of the driving motor 122 when the user does not maintain the grip state is performed. When the user does not maintain the grip part 112 of the housing 110 in the grip state (when the user does not hold the tool), the control unit 140 receives the signal of the sensing means 150 and controls the operation of the driving motor 122 to immediately stop.

Next, step S40 of cutting off the power transmitted to the driving motor 122 by turning off the power switch 114 is performed. The control unit 140 stops the operation of the driving motor 122 and then turns off the power switch 114 to cut off the power transmitted to the driving motor 122.

After the above step S40, the operation of the tool may be terminated by turning off the power of the power switch 114. Meanwhile, when necessary, the user switches from the mode setting unit 160 to the reset mode, the operation may be fed back to the step S10.

Meanwhile, when the user maintains the tool in the grip state, step S50 of operating the driving motor 122 by applying power to the tool is performed. That is, when the user maintains the grip part 112 of the housing 110 in the grip state (when the user holds the tool), the power of the power switch 114 supplied to the driving motor 122 may be maintained in the on state through the control unit 140.

According to the electric grinder with safety measures according to an embodiment of the present invention, when the user misses the tool, the control unit 140 stops the operation of the driving motor 124 by receiving the signal of the sensing means 150 and then cuts off the power switch 114 to enhance the stability ofthe tool. In addition, since the user can select and switch from the safety mode ofthe mode setting unit 160 to the operating mode or the reset mode, the convenience of the tool can be improved.

Moreover, the user may directly set the time for the safety mode or the operating mode through the mode setting unit 160 to appropriately allocate the work time and the rest time, so that the work efficiency and safety may be improved during long work.

Meanwhile, when a safety accident occurs, such as a user does not take measures separately within a set time after the mode setting unit 160 switches to a safety mode, the user can quickly take safety measures by transmitting emergency notification to an external emergency institution through a mobile device set in the mode setting unit 160 by the control unit 140.

### [Industrial Applicability]

The electric grinder with safety measures according to the present invention may switch to the tool safety mode to stop the operation of the tool when the user misses the tool regardless of the work environment or the user's grip position and may restart the tool by releasing the tool safety mode to enhance safety and convenience.

## Claims

1. A electric grinder with safety measures, comprising:
a housing provided with a sensing means for sensing a human contact or a non-contact state in a grip part;
a driving unit provided with a blade operating through a driving motor and a power transmission shaft on one side of the housing;
a power supply unit provided on the other side of the housing and supplying power to the driving motor; and
a control unit configured to control the driving motor to stop driving when the sensing means receives a signal of a human non-contact state.

2. The electric grinder having a safety means of claim 1, further comprising a mode setting unit configured to display an image of a tool operation state on a surface of the housing and to select and switch to a safety mode, an operating mode, or a reset mode.

3. The electric grinder having safety means of claim 2, wherein the mode setting unit is switchable from a certain condition to a safety mode by the control unit or is selectively switchable to a reset mode or an operating mode by a user, and is able to change a tool operation condition through time setting in the corresponding mode.

4. The electric grinder of claim 2 or 3, wherein the mode setting unit is configured to be set to be interlocked with the user's mobile device.

5. The electric grinder of claim 3, wherein, when receiving a signal in a human non-contact state through the sensing means, the control unit switches to the safety mode of the mode setting unit to stop the driving of the driving motor and then cut off the power of the power switch.

6. The electric grinder having safety means of claim 4, wherein, when the mode setting unit is switched from the operating mode to the safety mode and then not switched to the reset mode or the operating mode within the set time, the control unit transmits an emergency notification to an external emergency institution through the mobile device.

7. The electric grinder of claim 1, wherein the sensing means is a metal pad or a touch sensor that can detect current flowing in a human body, and the sensing means is mounted in a plurality on the surface of the grip part.
